(19)

Europäisches
Patentamt

European
Patent Office

Office européen
des brevets

(11) **EP 1 847 752 B1**

(12) **EUROPÄISCHE PATENTSCHRIFT**

(45) Veröffentlichungstag und Bekanntmachung des
Hinweises auf die Patenterteilung:
**24.11.2010 Patentblatt 2010/47**

(21) Anmeldenummer: **07005683.3**

(22) Anmeldetag: **20.03.2007**

(51) Int Cl.:
***F16L 11/15*** *(2006.01)*

(54) **Wellrohr aus thermoplastischem Kunststoff**

Thermoplastic corrugated pipe

Tube ondulé en matière synthétique thermoplastique

(84) Benannte Vertragsstaaten:
**AT BE BG CH CY CZ DE DK EE ES FI FR GB GR
HU IE IS IT LI LT LU LV MC MT NL PL PT RO SE
SI SK TR**

(30) Priorität: **20.04.2006 DE 102006018374**

(43) Veröffentlichungstag der Anmeldung:
**24.10.2007 Patentblatt 2007/43**

(73) Patentinhaber: **Drossbach GmbH & Co. KG
86641 Rain am Lech (DE)**

(72) Erfinder:
• **Kellner, Michael, Dipl.-Ing.
86641 Rain/Sallach (DE)**
• **Hetzner, Claus
90513 Zirndorf (DE)**

(74) Vertreter: **Altenburg, Udo et al
Patent- und Rechtsanwälte
Bardehle . Pagenberg . Dost . Altenburg .
Geissler
Galileiplatz 1
81679 München (DE)**

(56) Entgegenhaltungen:
| | |
|---|---|
| EP-A- 1 217 282 | EP-A- 1 384 930 |
| EP-A1- 0 213 674 | WO-A-00/31457 |
| WO-A-02/38999 | WO-A-87/05376 |
| DE-A1- 2 141 281 | DE-U1- 29 920 442 |
| FR-A1- 2 835 306 | GB-A- 2 300 684 |
| GB-A- 2 392 963 | US-A- 2 890 723 |
| US-A- 3 330 303 | US-A- 4 759 389 |
| US-A- 4 867 203 | US-A- 5 007 462 |
| US-A- 5 060 696 | US-A- 5 316 047 |
| US-A- 5 385 174 | US-A- 5 390 704 |
| US-A- 5 573 038 | US-A- 5 803 132 |
| US-A1- 2003 089 411 | US-A1- 2004 129 328 |
| US-B1- 6 186 182 | US-B1- 6 607 010 |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft Wellrohre aus thermoplastischem Kunststoff.

Die EP 0 385 465 B2 offenbart ein Leitungsrohr aus Kunststoff, insbesondere für Abwässer, mit einem glatten Innenrohr und einem damit verbundenen gewellten Außenrohr, das über Muffenverbindungen mit einem gleichen oder einem einwandigen glatten Leitungsrohr verbunden werden kann.

Die EP 0 820 566 B1 offenbart ein mehrschichtiges Wellrohr, das ein glattes Innenrohr, ein gewelltes Außenrohr und eine Kunststoffschicht dazwischen aufweist.

Der vorliegenden Erfindung liegt die Aufgabe zugrunde, ein verbessertes Wellrohr zu schaffen, das eine hohe Steifigkeit gegen in radialer Richtung auf das Wellrohr einwirkende Druckkräfte und eine hohe Flexibilität in Bezug auf eine Verbiegung des Wellrohres quer zu dessen Längsachse aufweist, wobei das Wellrohr gleichzeitig ein möglichst geringes Gewicht aufweisen soll. Ein geringes Gewicht des Wellrohres hat zur Folge, dass bei der Herstellung weniger Kunststoff erforderlich ist, und dass die Handhabung des Wellrohr bei der Verlegung erleichtert ist.

Diese Aufgabe wird durch ein Wellrohr gemäß Anspruch 1 gelöst. Die abhängigen Ansprüche betreffen vorteilhafte Ausgestaltungen der Erfindung.

Das erfindungsgemäße Wellrohr aus thermoplastischem Kunststoff umfasst ein Innenrohr und ein damit verbundenes gewelltes Außenrohr, wobei das Profil des Außenrohres erste Abschnitte mit einem ersten mittleren Durchmesser, zweite Abschnitte mit einem zweiten mittleren Durchmesser, der größer ist als der erste mittlere Durchmesser, und dazwischen liegende Flanken, welche die ersten Abschnitte mit den jeweils benachbarten zweiten Abschnitten verbinden, aufweist. Die ersten Abschnitte können dabei als Wellentäler bezeichnet werden; und die zweiten Abschnitte einschließlich der angrenzenden Flanken als Wellenberge.

Erfindungsgemäß sind die zweiten Abschnitte - also die Kuppen der Wellenberge - nicht nur in Umfangsrichtung, sondern auch in Bezug auf die Längsrichtung des Wellrohres gekrümmt, wobei die konvexe Seite nach außen oder nach innen gerichtet sein kann. Der Krümmungsradius ist dabei in Bezug auf die Krümmung der zweiten Abschnitte in Längsrichtung des Wellrohres vorzugsweise kleiner als der Außendurchmesser des Wellrohres, insbesondere kleiner als 1/6 bzw. 1/12 der Außendurchmesser des Wellrohres. Der Krümmungsmittelpunkt liegt in Bezug auf die Krümmung der zweiten Abschnitte in Längsrichtung des Wellrohres etwa auf der Wandung des Innenrohres bzw. in dessen Bereich.

Durch diese Ausbildung der Wellenberge wird eine hohe Steifigkeit gegen in radialer Richtung auf das Wellrohr einwirkende Druckkräfte erreicht, da durch die konvexe Form der Widerstand gegen ein Einknicken des Wellrohres verringert wird. Gleichzeitig wird eine erhöhte Flexibilität in Bezug auf eine Verbiegung des Wellrohres quer zu dessen Längsachse erreicht. Denn die konvexe Form der Wellenberge lässt mit weniger Kraftaufwand auf der Zugseite des Wellrohres im gebogenen Zustand eine Verlängerung durch Strecken der Krümmung, und auf der Druckseite leichter eine Verkürzung durch weiteres Zusammendrücken der Krümmung zu. Durch diese vorteilhaften mechanischen Eigenschaften können die Wandungen im Ergebnis dünner ausgebildet werden, so dass das erfindungsgemäße Wellrohr erheblich leichter als herkömmliche Wellrohre ausgebildet werden kann.

Erfindungsgemäß ist es besonders vorteilhaft, wenn die zweiten Abschnitte jeweils - in Bezug auf einen Schnitt in Längsrichtung des Wellrohres - einen gewellten Querschnitt aufweisen, wobei mindestens eine konvexe Seite nach innen gerichtet ist, und mindestens zwei konvexe Seiten nach außen gerichtet sind. Durch die erleichterte Verlängerung bzw. Verkürzung dieser Abschnitte kann das Wellrohr leicht verbogen werden, ohne in seiner Steifigkeit gegen in radialer Richtung auf das Wellrohr einwirkende Druckkräfte abzunehmen. Die gewellten zweiten Abschnitte können dabei jeweils mindestens zwei Wellenberge und mindestens ein Wellental aufweisen, besonders bevorzugt jedoch drei Wellenberge und zwei Wellentäler.

Erfindungsgemäß ist es weiter vorteilhaft, wenn die Übergangsbereiche zwischen den zweiten Abschnitten - also den Kuppen der Wellenberge - und den jeweils angrenzenden Flanken ebenfalls eine Krümmung in Bezug auf die Längsrichtung des Wellrohres vorzusehen, die vorzugsweise einen kleineren Krümmungsradius als der Krümmungsradius der zweiten Abschnitte - also der Kuppen der Wellenberge - aufweisen. Gleiches gilt für die Übergangsbereiche zwischen den ersten Abschnitten - also den Wellentälern - und den jeweils angrenzenden Flanken, wobei die Krümmungsradien dieser Übergangsbereiche noch kleiner ausgebildet sein sollten, um die Verbindung zwischen Außen- und Innenrohr in diesem Bereich nicht zu schwächen.

Um weiter Material einzusparen, ist es erfindungsgemäß weiter vorteilhaft, wenn die Wandung des Wellrohres im axialen Bereich der ersten Abschnitte - also der Wellentäler - kleiner ausgebildet ist als die Summe der Wandungsdicke der zweiten Abschnitte - also der Kuppen der Wellenberge - und der Wandungsdicke des Innenrohres im axialen Bereich der Wellenberge. Als besonders vorteilhaft hat es sich herausgestellt, wenn die Wandung des Wellrohres im axialen Bereich der ersten Abschnitte - also der Wellentäler - etwa 90 % dieser Summe beträgt.

Außerdem ist es zur Materialeinsparung erfindungsgemäß möglich, dass die Flanken radial nach außen dünner werden, insbesondere um mindestens 20 - 30 % in Bezug auf die Flankenwandung, die am ersten Abschnitt angrenzt bis zur Flankenwandung, die am zweiten Abschnitt angrenzt.

Nach einem weiteren Aspekt der Erfindung kann das Profil des Außenrohres teilweise eine Parabelform, eine Kosinusform und/oder eine Exponentialform aufweisen. Dies soll insbesondere als ein im Querschnitt parabelförmiger, kosinusförmiger und/oder exponentialförmiger Verlauf der Außenoberfläche des Außenrohrs verstanden werden, welcher mit Hilfe von Parabel-, Kosinus- und/oder Exponentialfunktionen beschrieben werden kann. Die Profile des Außenrohrs können so - abhängig von der Wahl der Parameter der entsprechenden Funktionen - sowohl eine hohe Steifigkeit gegen die in radialer Richtung auf das Wellrohr einwirkende Druckkräfte als auch eine erhöhte Flexibilität in Bezug auf eine Verbiegung des Wellrohres quer zu dessen Längsachse aufweisen.

Zwischen den zweiten Abschnitten - also den Kuppen der Wellenberge - und den jeweils angrenzenden Flanken sind jeweils zweite Übergangsbereiche - wie bereits oben besprochen - mit einer Krümmung in Bezug auf die Längsrichtung des Wellrohres vorhanden. Entsprechend sind auch zwischen den ersten Abschnitten - also den Wellentälern - und den jeweils angrenzenden Flanken jeweils erste Übergangsbereiche mit einer Krümmung in Bezug auf die Längsrichtung des Wellrohres vorhanden.

In einer ersten Variante können die zweiten Abschnitte alleine oder zusammen mit den jeweiligen zweiten Übergangsbereichen der Form einer Parabelfunktion, Kosinusfunktion und/oder Exponentialfunktion entsprechen. In einer zweiten Variante können die zweiten Abschnitte zusammen mit den jeweiligen zweiten Übergangsbereichen und teilweise oder vollständig den Flanken der Form einer Parabelfunktion, Kosinusfunktion und/oder Exponentialfunktion entsprechen.

Um in Bezug auf die Wellenberge und Wellentäler ein symmetrisches Profil des Außenrohres zu erhalten, können die ersten Abschnitte alleine oder zusammen mit den jeweils ersten Übergangsbereiche der Form der entlang der Längsachse des Wellrohres gespiegelten entsprechenden Parabelfunktion, Kosinusfunktion und/oder Exponentialfunktion entsprechen. In einer anderen Variante können die ersten Abschnitte zusammen mit den jeweiligen ersten Übergangsbereichen und teilweise oder vollständig den Flanken der Form der entlang der Längsachse des Wellrohres gespiegelten entsprechenden Parabelfunktion, Kosinusfunktion und/oder Exponentialfunktion entsprechen.

Es wird darauf hingewiesen, dass ein symmetrisches Profil des Außenrohres für bestimmte Anwendungen nicht gewünscht sein kann, da die Krümmungsradien der ersten Übergangsbereiche kleiner ausgebildet sein sollten als die Krümmungsradien der zweiten Übergangsbereiche, um die Verbindung zwischen Außen- und Innenrohr in diesem Bereich nicht zu schwächen. Deshalb kann die Form der entlang der Längsachse des Wellrohres gespiegelten entsprechenden Parabelfunktion, Kosinusfunktion und/oder Exponentialfunktion gestaucht und/oder verzerrt sein.

Das Profil des Außenrohres kann ein gedachtes Koordinatensystem aufweisen, auf welches sich die Parabelfunktion, Kosinusfunktion und/oder Exponentialfunktion beziehen. Der Ursprung des gedachten Koordinatensystems kann in dem Maximumspunkt eines zweiten Abschnittes - also der Kuppe eines Wellenberges - liegen, d.h. der zweite Abschnitt weist im Maximumspunkt den größten Durchmesser auf. Die $x$-Richtung kann parallel zu der Längsrichtung des Wellrohres und die $y$-Richtung parallel zu der Querrichtung des Wellrohres verlaufen.

In einer Ausführungsform der vorliegenden Erfindung kann die Parabelfunktion der Funktion $y = -a|x^m|$ mit den Parametern $a$ und $m$ entsprechen.

Um eine Skalierung der im Folgenden auftretenden Parameter zur Verfügung zu stellen, können die $x$- und $y$-Werte auf einen Wert $A$ normiert werden, der dem Abstand zwischen zwei benachbarten Maximumspunkten der zweiten Abschnitte - also zwischen den Kuppen zweier benachbarter Wellenberge - entspricht.

Der Parameter $a$ kann für ein parabelförmiges Profil eine positive, reelle Zahl sein, insbesondere eine Zahl im Bereich zwischen 1 bis 50, insbesondere zwischen 2 und 20, insbesondere zwischen 5 und 10. Der Parameter $m$ kann für ein parabelförmiges Profil einer positiven, ganzen Zahl größer als 1 entsprechen, insbesondere einer Zahl im Bereich zwischen 2 und 10, insbesondere zwischen 2 und 4, insbesondere $m = 2$ oder $m = 3$.

In einer weiteren Ausführungsform der vorliegenden Erfindung kann die Kosinusfunktion der Funktion $y = \cos(ax)^m - 1$ mit den Parametern $a$ und $m$ entsprechen. Alternativ kann die Kosinusfunktion auch durch die Funktion $y = |\cos(ax)^m| - 1$ mit den Parametern $a$ und $m$ dargestellt werden.

Der Parameter $a$ kann für ein kosinusförmiges Profil eine positive, reelle Zahl sein, insbesondere eine Zahl im Bereich zwischen 1 und 20, insbesondere zwischen 3 und 10, insbesondere zwischen 4 und 8. Der Parameter $m$ kann für ein kosinusförmiges Profil einer positive, reellen Zahl entsprechen, insbesondere einer Zahl im Bereich zwischen 1 und 10, insbesondere zwischen 1 und 4, insbesondere $m = 1$ oder $m = 2$.

Weist das Außenrohr ein exponentialförmiges Profil auf, so kann in einer weiteren Ausfiihrungsform der vorliegenden Erfindung die Exponentialfunktion der Funktion $y = e^{-a|x^m|} - 1$ mit den Parametern $a$ und $m$ entsprechen.

Der Parameter $a$ kann für ein exponentialförmiges Profil eine positive, reelle Zahl sein, insbesondere eine Zahl im Bereich zwischen 1 und 100, insbesondere zwischen 5 und 80, insbesondere zwischen 10 und 50. Der Parameter $m$ kann für ein exponentialförmiges Profil einer positiven, ganzen Zahl entsprechen, insbesondere einer Zahl im Bereich zwischen 1 und 10, insbesondere zwischen 1 und 5, insbesondere $m = 2$ oder $m = 4$.

Nach einem weiteren Aspekt der vorliegenden Erfindung, kann das Profil des Außenrohres zumindest teilweise in Bezug auf die Längsrichtung des Wellrohres spiralförmig bzw. schraubenförmig um das Innenrohr verlaufen, d.h. der Längsverlauf der Wellenberge sowie der Wellentäler um den Umfang des Innenrohres ist spiralförmig bzw. schraubenförmig, und nicht geschlossen. Dadurch wird sowohl eine hohe Steifigkeit gegen die in radialer Richtung auf das Wellrohr einwirkende Druckkräfte als auch eine erhöhte Flexibilität in Bezug auf eine Verbiegung des Wellrohres quer zu dessen Längsachse aufweisen.

Fig. 1     zeigt ein Wellrohr aus thermoplastischem Kunststoff nach der vorliegenden Erfindung;

Fig. 2     zeigt einen Längsquerschnitt im Bereich jeweils eines Wellenberges eines Wellrohres gemäß einem Ausführungsbeispiel der vorliegenden Erfindung;

Fig. 3     zeigt einen Längsquerschnitt im Bereich jeweils eines Wellenberges eines Wellrohres ;

Fig. 4     zeigt zwei parabelförmige Profile des Außenrohres ;

Fig. 5     zeigt zwei kosinusförmige Profile des Außenrohres ;

Fig. 6     zeigt zwei exponentialförmige Profile des Außenrohres ;

Fig. 7     zeigt einen Längsquerschnitt im Bereich jeweils eines Wellenberges eines Wellrohres mit parabelförmigem Profil des Außenrohres ;

Fig. 8     zeigt einen Längsquerschnitt im Bereich zweier Wellenberge eines Wellrohres mit parabelförmigem Profil des Außenrohres ;

Fig. 9     zeigt einen Längsquerschnitt im Bereich jeweils eines Wellenberges eines Wellrohres mit kosinusförmigem Profil des Außenrohres ;

Fig. 10     zeigt einen Längsquerschnitt im Bereich zweier Wellenberge eines Wellrohres mit kosinusförmigem Profil des Außenrohres .

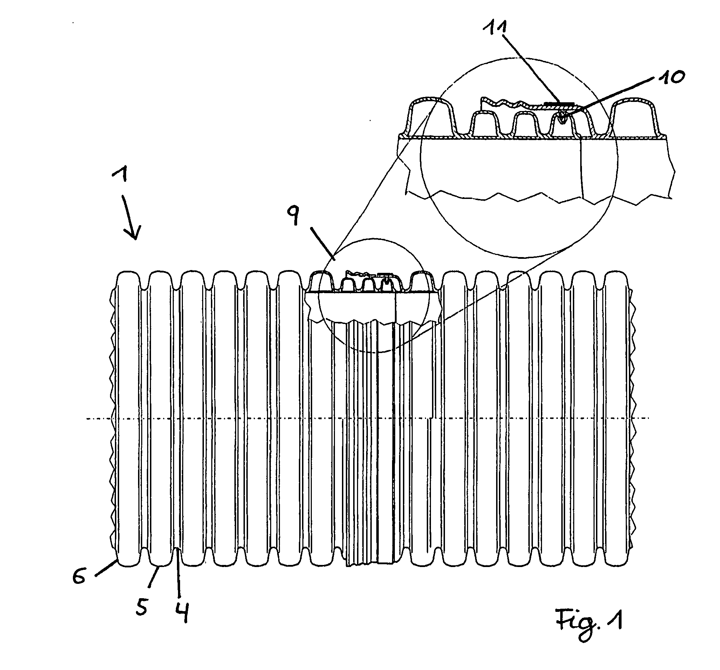

In **Fig. 1** ist ein Kunststoffrohr **1** mit einer gewellten Außenwandung und einer glatten Innenwandung dargestellt, das insbesondere für Abwasserkanalsysteme verwendet wird. Das Kunststoffrohr **1** weist vorzugsweise eine Muffe bzw. Anschlussstelle **9** auf zur Verbindung mit einem weiteren Kunststoffrohr, wobei die Anschlussstelle **9** durch eine Dichtung **10** abgedichtet ist. In dem Bereich der Dichtung **10** kann ein Verstärkungsband **11** vorgesehen sein, um ein Kriechen der Anschlussstelle **9** im Bereich der Dichtung **10** zu verhindern.

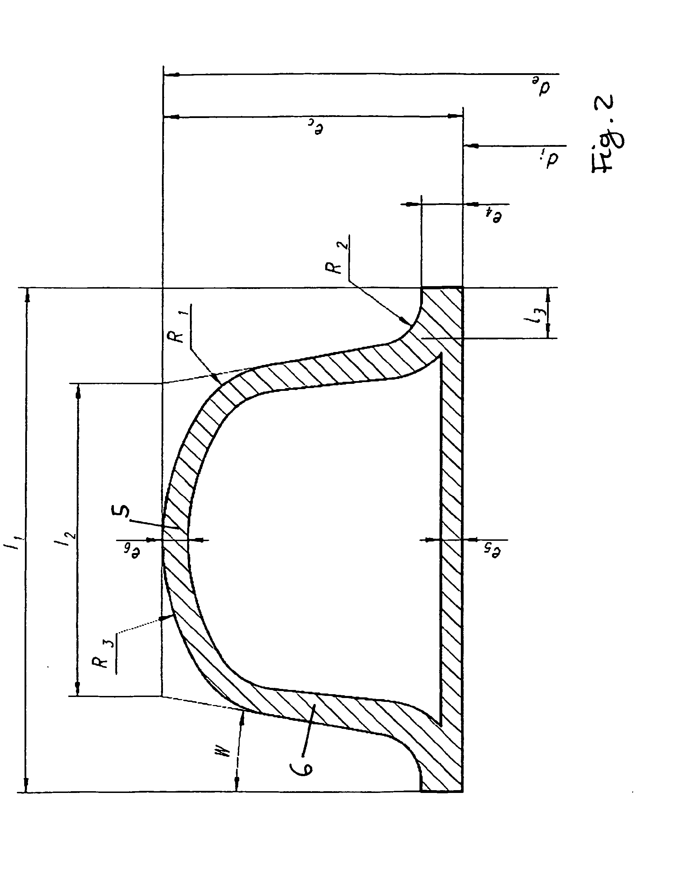

**Fig. 2** zeigt einen Längsquerschnitt im Bereich eines Wellenberges eines erfindungsgemäßen Wellrohres mit einem Innendurchmesser $d_i$. Das Außenrohr weist abwechselnd Wellentäler bzw. erste Abschnitte **4** und Wellenberge auf, wobei letztere aus zwei Flanken **6** und einem zweiten Abschnitt **5,** also der Kuppe des Wellenberges, besteht. Die zweiten Abschnitte **5** sind in Bezug auf die Längsrichtung des Wellrohres gekrümmt mit einem Krümmungsradius $R_3$ (bezogen auf die äußere Oberfläche des Außenrohres), der etwa 1/18 bezogen

auf den Außendurchmesser $d_e$ des Wellrohres beträgt. Der Krümmungsradius $R_3$ entspricht etwa der Höhe $e_c$ eines Wellenberges, mit anderen Worten etwa 1/2 der Differenz zwischen dem Außendurchmesser $d_e$ und dem Innendurchmesser $d_i$ des Wellrohres. Der Krümmungsmittelpunkt liegt damit etwa auf der Wandung des Innenrohres.

Der Übergangsbereich zwischen den zweiten Abschnitten **5** - also den Kuppen der Wellenberge - und den jeweils angrenzenden Flanken **6** weisen nach dem in **Fig.** 2 gezeigten Ausführungsbeispiel ebenfalls eine Krümmung in Bezug auf die Längsrichtung des Wellrohres auf mit einem Krümmungsradius $R_1$ bezogen auf die äußere Oberfläche des Außenrohres. Der Krümmungsradius $R_2$ des Übergangsbereichs zwischen den ersten Abschnitten - also den Wellentälern - und den jeweils angrenzenden Flanken beträgt dagegen nur etwa 1/2 $R_1$.

Um weiter Material für die Herstellung des Wellrohres einzusparen, ist die Wandung $e_4$ des Wellrohres nach Fig. 2 im axialen Bereich der ersten Abschnitte **4** - also der Wellentäler - kleiner ausgebildet ist als die Summe der Wandungsdicke $e_6$ der zweiten Abschnitte und der Wandungsdicke $e_5$ des Innenrohres im axialen Bereich der Wellenberge ($e_4 < e_5 + e_6$). Die Wandung des Wellrohres beträgt im axialen Bereich der ersten Abschnitte **4** vorzugsweise nur etwa 90 % dieser Summe.

Außerdem ist es zur Materialeinsparung erfindungsgemäß möglich, dass die Flanken **6** radial nach außen dünner werden. Bei dem Ausführungsbeispiel nach **Fig.** 2 verjüngt sich die Flankenwandung, die am ersten Abschnitt angrenzt, bis zur Flankenwandung, die am zweiten Abschnitt angrenzt, um etwa 30 %.

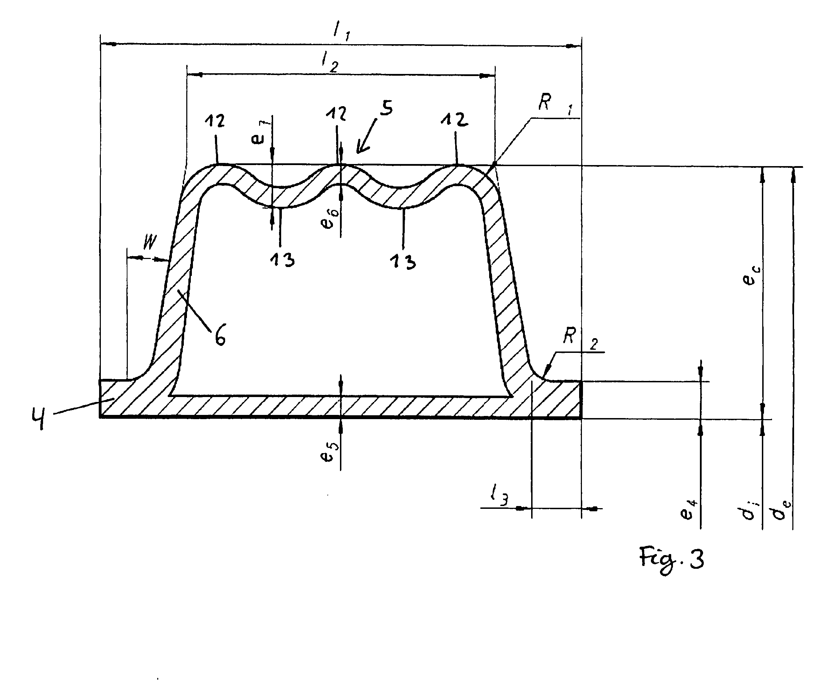

Die folgenden Beispiele der Fig. 3 bis 10 fallen nicht unter den Anspruch 1. **Fig. 3** zeigt ein weiteres Ausführungsbeispiel der vorliegenden Erfindung, bei dem auch der zweite Abschnitt **5** selbst einen gewellten Querschnitt in Längsrichtung des Wellrohres aufweist. In dem dargestellten Ausführungsbeispiel besteht der zweite Abschnitt **5** aus drei Wellenbergen **12** und zwei Wellentälern **13**. Die zweiten Abschnitte können jedoch auch aus zwei Wellenbergen und einem Wellental bestehen, oder vier Wellenbergen und drei Wellentälern. Im Falle einer Verbiegung des Wellrohres ist die Verlängerung bzw. Verkürzung der gewellten zweiten Abschnitte **5** durch einen "Ziehharmonika-Effekt" erheblich erleichtert, ohne dass die Steifigkeit gegen in radialer Richtung auf das Wellrohr einwirkende Druckkräfte abnimmt.

Die Wellenberge und Wellentäler der gewellten zweiten Abschnitte weisen in **Fig. 3** jeweils eine Richtungsänderung von etwa 75˚ auf, bis eine mathematisch positive Krümmung in eine mathematisch negative Krümmung umschlägt. Es können jedoch auch Richtungsänderungen von nur etwa 30˚ gegeben sein. Besonders bevorzugt ist jedoch der Bereich zwischen etwa 50˚ und etwa 120˚, insbesondere 60˚ bis 90˚.

Die gewellte Form der zweiten Abschnitte **5** kann auch ausgedrückt werden in Bezug auf das Verhältnis der Wanddicke $e_6$ im zweiten Abschnitt gegen-

über der Höhendifferenz $e_7$ zwischen einem Wellenberg **12** und einem Wellental **13**. In dem in **Fig. 3** gezeigten Ausführungsbeispiel kann beträgt das Verhältnis $e_7/e_6$ etwa 2, es können jedoch auch Verhältnisse zwischen 1,3 und 5, insbesondere zwischen 1,5 und 3 vorgesehen werden.

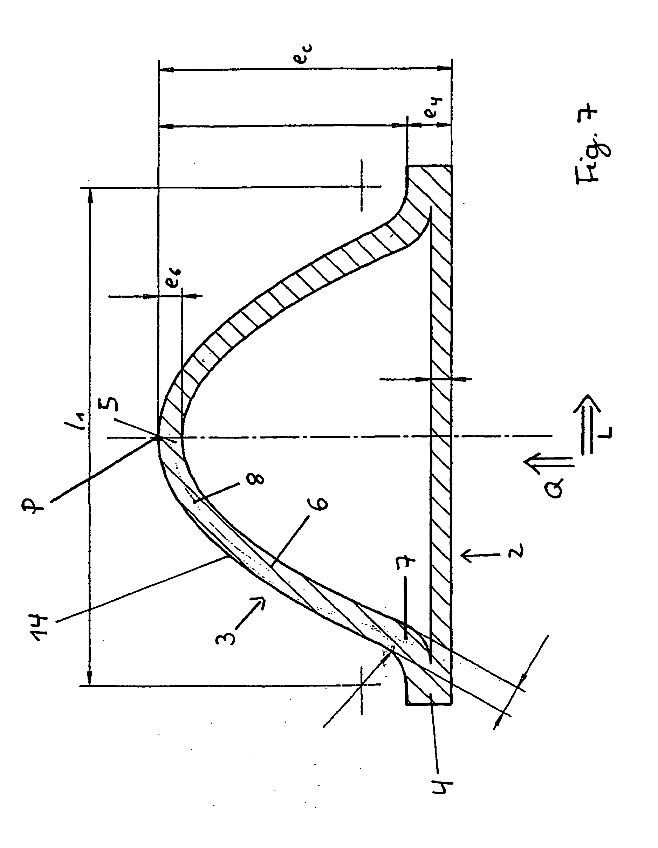

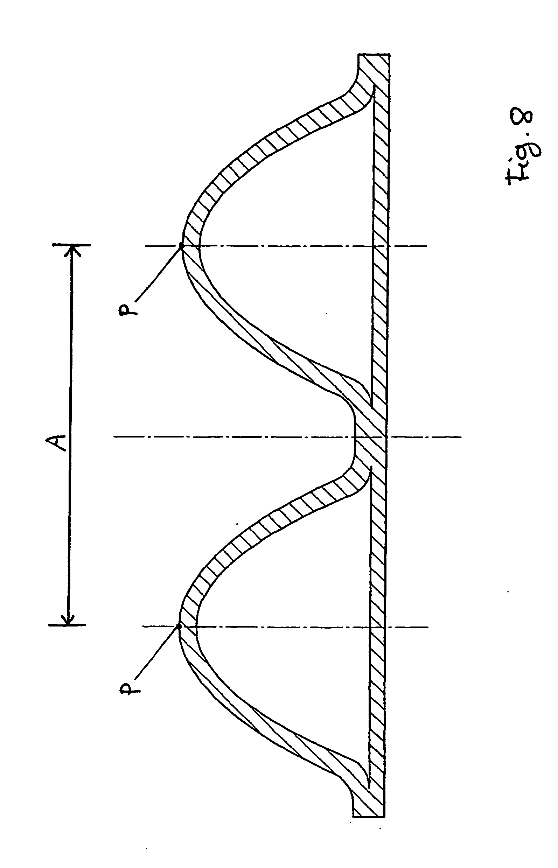

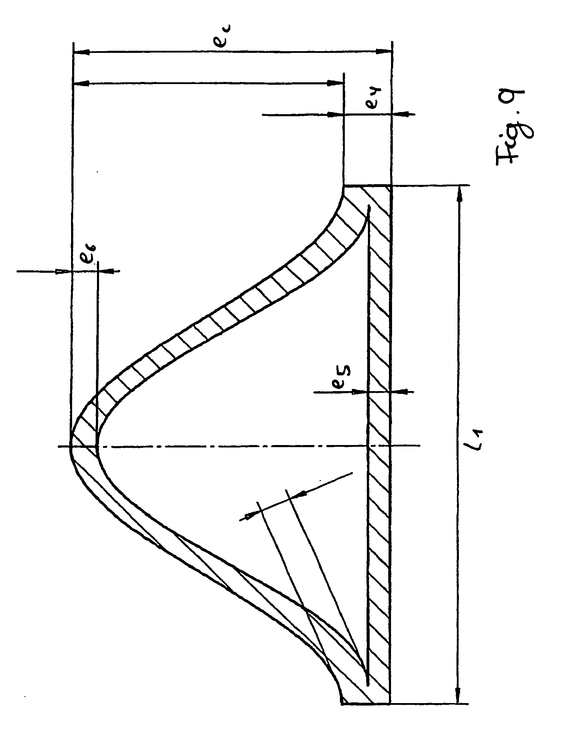

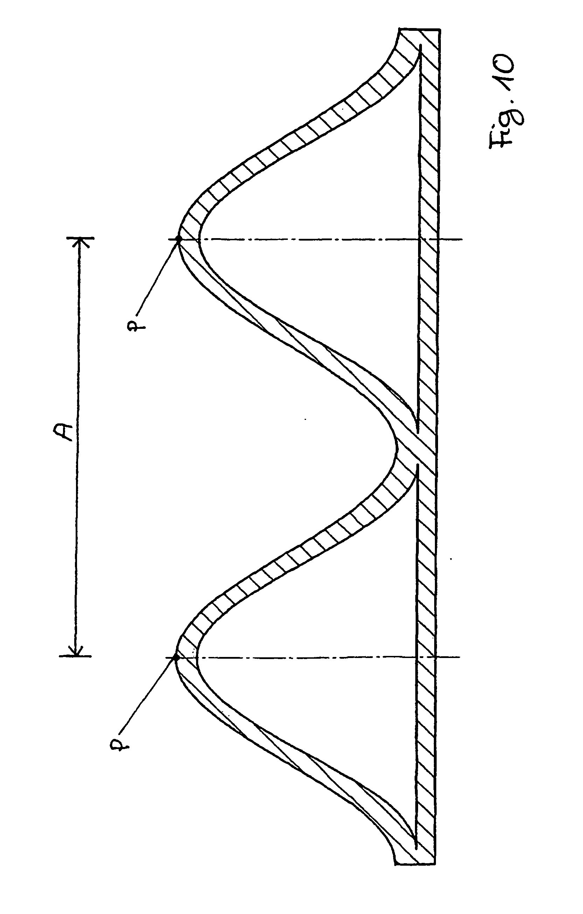

Nach einem weiteren Aspekt der Erfindung kann das Profil des Außenrohres **3** eine Parabelform, eine Kosinusform und/oder eine Exponentialform aufweisen. Dies soll insbesondere so verstanden werden, dass die Außenoberfläche **14** des Außenrohrs **3** im Querschnitt einen parabelförmigen Verlauf aufweist (entsprechend **Fig. 7** und **Fig. 8)**. Alternativ oder kumulativ kann der Querschnitt auch kosinusförmig und/oder exponentialförmig verlaufen. Ein kosinusformiger Verlauf des Querschnitts ist in **Fig.** 9 und **Fig. 10** dargestellt.

Das gedachte Koordinatensystem, auf welches sich die Parabelfunktion, Kosinusfunktion und/oder Exponentialfunktion bezieht, hat seinen Ursprung **U** in dem Maximumspunkt **P** eines zweiten Abschnittes (der Kuppe eines Wellenberges), d.h. im Maximumspunkt weist der zweite Abschnitt den größten Durchmesser auf (siehe **Fig. 7**). Die x-Richtung kann parallel zu der Längsrichtung **L** des Wellrohres und die $y$-Richtung parallel zu der Querrichtung **Q** des Wellrohres verlaufen.

Um eine Skalierung der im Folgenden auftretenden Parameter bereit zu stellen, können die $x$- und $y$-Werte auf einen Wert $A$ normiert werden, der dem Abstand zwischen zwei benachbarten Maximumspunkten der zweiten Abschnitte - also zwischen den Kuppen zweier benachbarter Wellenberge - entspricht (siehe **Fig. 8**).

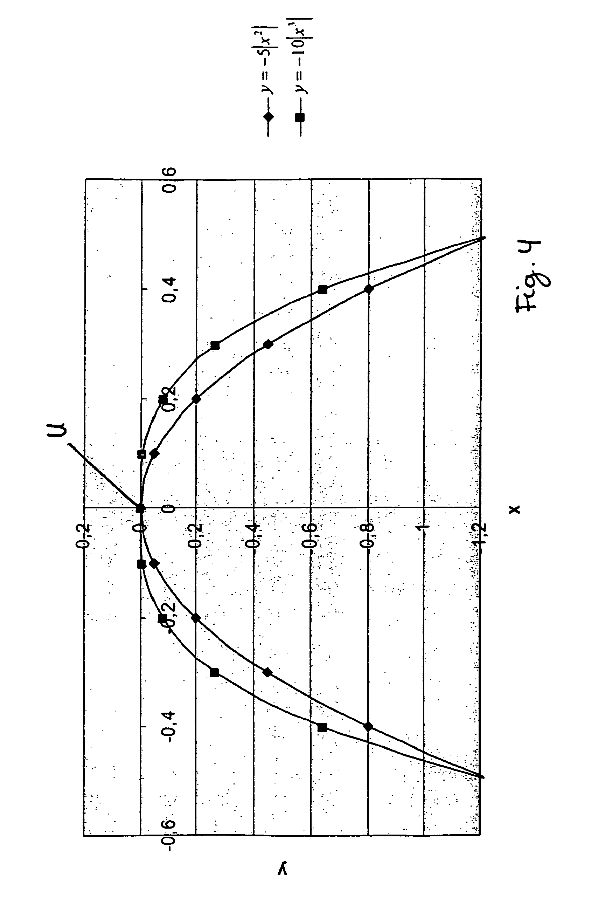

In der in **Fig. 4** dargestellten Ausführungsform der vorliegenden Erfindung entspricht die Parabelfunktion der Funktion $y = -a|x^m|$ mit den Parametern $a$ und $m$, wobei eine erste Kurve mit den Parametern $a = 5$ und $m = 2$ und eine zweite Kurve mit den Parametern $a = 10$ und $m = 3$ dargestellt ist. Es wird jedoch ausdrücklich darauf hingewiesen, dass der Parameter $a$ erfindungsgemäß eine beliebige positive, reelle Zahl sein, insbesondere eine Zahl im Bereich zwischen 1 bis 50, insbesondere zwischen 2 und 20, insbesondere zwischen 5 und 10. Der Parameter $m$ kann erfindungsgemäß einer beliebigen positiven, ganzen Zahl größer als 1 entsprechen, insbesondere einer Zahl im Bereich zwischen 2 und 10, insbesondere zwischen 2 und 4, insbesondere $m = 2$ oder $m = 3$.

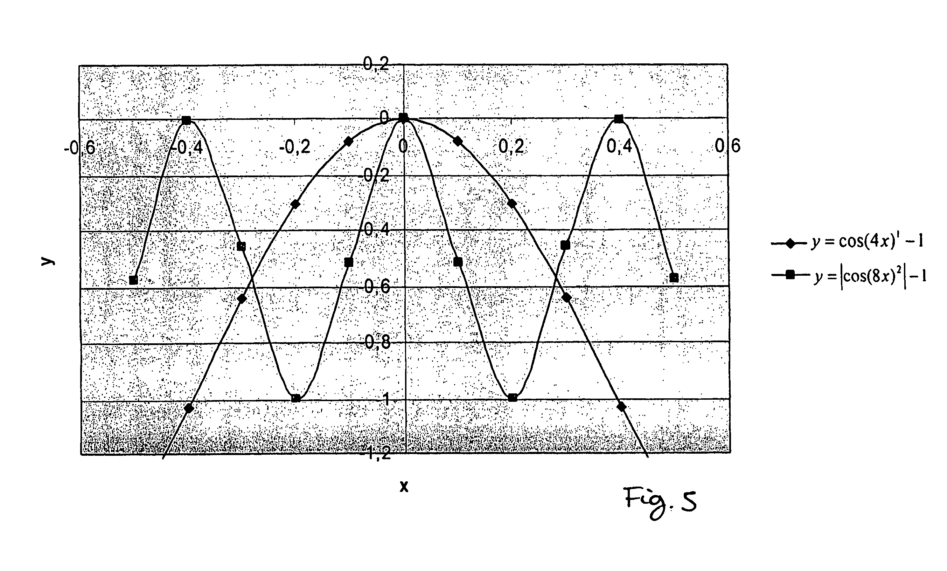

In der Ausführungsform nach **Fig. 5** wird die Kosinusfunktion durch die Funktion $y = \cos(ax)^m - 1$ mit den Parametern $a$ und $m$ dargestellt. Alternativ kann die Kosinusfunktion auch der Funktion $y = |\cos(ax)^m| - 1$ mit den Parametern $a$ und $m$ entsprechen. Eine erste Kurve besitzt die Parametern $a = 4$ und $m = 1$. Eine zweite Kurve weist die Parametern $a = 8$ und $m = 2$ auf. Es wird erneut ausdrücklich darauf hingewiesen, dass der Parameter $a$ erfindungsgemäß eine beliebige positive, reelle Zahl sein, insbesondere eine Zahl im Bereich zwischen 1 und 20, insbesondere zwischen 3 und 10, insbesondere zwischen 4 und 8. Der Parameter $m$ kann erfindungsgemäß einer beliebigen positive, reellen Zahl entsprechen, insbesondere einer Zahl im Bereich zwischen 1 und 10, insbesondere zwischen 1 und 4, insbesondere $m = 1$ oder $m = 2$.

In einer weiteren Ausführungsform der vorliegenden Erfindung entspricht die Exponentialfunktion der Funktion $y = e^{-a|x^m|} - 1$ mit den Parametern $a$ und $m$.

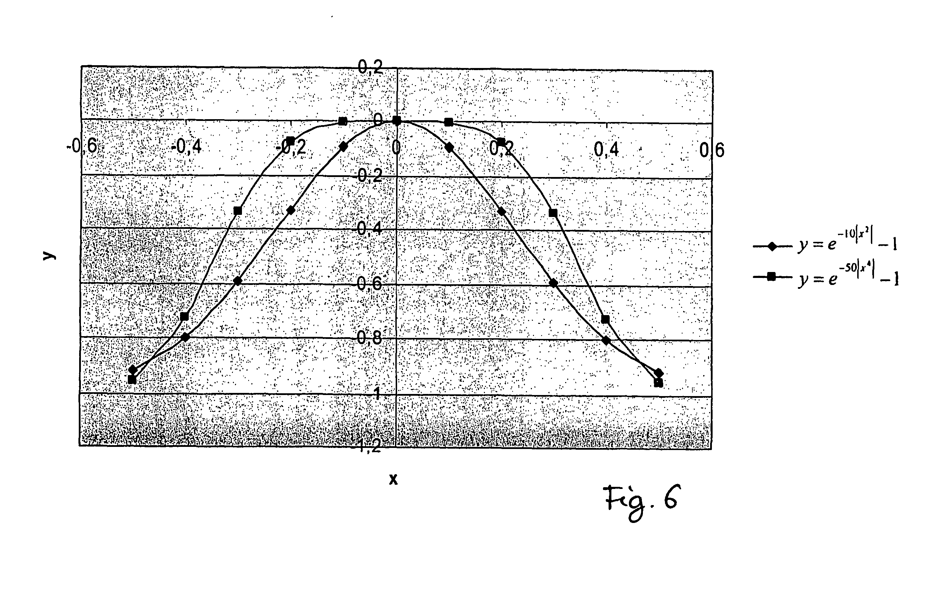

In **Fig. 6** ist eine erste solche Kurve mit den Parametern $a = 10$ und $m = 2$ und eine zweite solche Kurve mit den Parametern $a = 50$ und $m = 4$ dargestellt. Es wird jedoch auch hier ausdrücklich darauf hingewiesen, dass der Parameter $a$ erfindungsgemäß eine beliebige positive, reelle Zahl sein, insbesondere eine Zahl im Bereich zwischen 1 und 100, insbesondere zwischen 5 und 80, insbesondere zwischen 10 und 50. Der Parameter $m$ kann einer beliebigen positiven, ganzen Zahl entsprechen, insbesondere einer Zahl im Bereich zwischen 1 und 10, insbesondere zwischen 1 und 5, insbesondere $m = 2$ oder $m = 4$.

Wie in **Fig. 7** dargestellt, sind zwischen den zweiten Abschnitten **5 -** also den Kuppen der Wellenberge - und den jeweils angrenzenden Flanken **6** jeweils zweite Übergangsbereiche **8** mit einer Krümmung in Bezug auf die Längsrichtung **L** des Wellrohres **1** vorhanden. Entsprechend sind auch zwischen den ersten Abschnitten **4 -** also den Wellentälern - und den jeweils angrenzenden Flanken **6** jeweils erste Übergangsbereiche **7** mit einer Krümmung in Bezug auf die Längsrichtung **L** des Wellrohres **1** vorhanden.

In einer ersten Variante können die zweiten Abschnitte **5** alleine oder zusammen mit den jeweiligen zweiten Übergangsbereichen **8** der Form einer wie oben beschriebenen Parabelfunktion, Kosinusfunktion und/oder Exponentialfunktion entsprechen. In einer zweiten Variante können die zweiten Abschnitte **5** zusammen mit den jeweiligen zweiten Übergangsbereichen **8** und teilweise oder vollständig den Flanken **6** der Form einer solchen Parabelfunktion, Kosinusfunktion und/oder Exponentialfunktion entsprechen.

Um in Bezug auf die Wellenberg und Wellentäler ein symmetrisches Profil des Außenrohres zu erhalten (siehe **Fig. 10**), können die ersten Abschnitte **4** alleine oder zusammen mit den jeweils ersten Übergangsbereichen **7** der Form der entlang der Längsachse **L** des Wellrohres **1** gespiegelten entsprechenden Parabelfunktion, Kosinusfunktion und/oder Exponentialfunktion entsprechen. In einer anderen Variante können die ersten Abschnitte **4** zusammen mit den jeweiligen ersten Übergangsbereichen **7** und teilweise oder vollständig den Flanken **6** der Form der entlang der Längsachse **L** des Wellrohres **1** gespiegelten entsprechenden Parabelfunktion, Kosinusfunktion und/oder Exponentialfunktion entsprechen. In der in **Fig. 8** dargestellten Ausführungsform hingegen ist die Form der entlang der Längsachse des Wellrohres gespiegelten entsprechenden Parabelfunktion, Kosinusfunktion und/oder Exponentialfunktion gestaucht bzw. verzerrt.

Es hat sich gezeigt, dass das Wellrohr nach der vorliegenden Erfindung nicht nur eine hohe Steifigkeit gegen in radialer Richtung auf das Wellrohr einwirkende Druckkräfte und eine hohe Flexibilität in Bezug auf eine Verbiegung des Wellrohres quer zu dessen Längsachse aufweist, sondern gleichzeitig ein geringeres Gewicht im Vergleich zu herkömmlichen Wellrohren aufweist. Dadurch ist bei der Herstellung der Bedarf an Kunststoff verringert, und die Handhabung des Wellrohrs bei der Verlegung wird erleichtert.

**Patentansprüche**

1. Wellrohr (1) aus thermoplastischem Kunststoff, welches ein Innenrohr (2) und ein damit verbundenes gewelltes Außenrohr (3) umfasst, wobei das Profil des Außenrohres

   erste Abschnitte (4) mit einem ersten mittleren Durchmesser,

   zweite Abschnitte (5) mit einem zweiten mittleren Durchmesser, der größer ist als der erste mittlere Durchmesser,

   und dazwischen liegende Flanken (6), welche die ersten Abschnitte (4) mit den jeweils benachbarten zweiten Abschnitten (5) verbinden, aufweist, wobei die zweiten Abschnitte (5) in Bezug auf die Längsrichtung des Wellrohres jeweils mindestens einen gekrümmten Bereich aufweisen; zwischen den zweiten Abschnitten (5) und den jeweils angrenzenden Flanken (6) jeweils zweite Übergangsbereiche (8) mit einer Krümmung in Bezug auf die Längsrichtung des Wellrohres vorhanden sind,

   wobei der Krümmungsradius $R_1$ der zweiten Übergangsbereiche (8) kleiner ist als der Krümmungsradius $R_3$ der zweiten Abschnitte (5) und **dadurch gekennzeichnet, dass**

   der Krümmungsmittelpunkt in Bezug auf die Krümmung der zweiten Abschnitte (5) in Längsrichtung des Wellrohres etwa auf der Wandung des Innenrohres (2) bzw. in dessen Bereich liegt.

2. Wellrohr (1) gemäß Anspruch 1, **dadurch gekennzeichnet, dass** die zweiten Abschnitte (5) in Bezug auf die Längsrichtung des Wellrohres derart gekrümmt sind, dass die konvexe Seite nach außen gerichtet ist.

3. Wellrohr (1) gemäß Anspruch 1, **dadurch gekennzeichnet, dass** die zweiten Abschnitte (5) in Bezug auf die Längsrichtung des Wellrohres derart gekrümmt sind, dass die konvexe Seite nach innen gerichtet ist.

4. Wellrohr (1) gemäß einem der vorhergehenden Ansprüche, **dadurch gekennzeichnet, dass** der Krümmungsradius ($R_3$) in Bezug auf die Krümmung der zweiten Abschnitte (5) in Längsrichtung des Wellrohres deutlich kleiner ist als der Außendurchmesser ($d_e$) des Wellrohres, insbesondere kleiner als 1/6 des Außendurchmesser ($d_e$) des Wellrohres, insbesondere kleiner als 1/12 des Außendurchmesser ($d_e$) des Wellrohres.

5. Wellrohr (1) gemäß einem der vorhergehenden Ansprüche, **dadurch gekennzeichnet, dass** der Krümmungsradius ($R_3$) in Bezug auf die Krümmung der zweiten Abschnitte (5) in Längsrichtung des Wellrohres etwa 1/2 der Differenz zwischen dem Außendurchmesser ($d_e$) des Wellrohres und dem Innendurchmesser ($d_i$) des Wellrohres entspricht.

6. Wellrohr (1) gemäß Anspruch 1 oder 2, **dadurch gekennzeichnet, dass** die zweiten Abschnitte (5) jeweils einen gewellten Querschnitt aufweisen, wobei mindestens eine konvexe Seite (13) nach innen gerichtet ist, und mindestens zwei konvexe Seiten (12) nach außen gerichtet sind.

7. Wellrohr (1) gemäß Anspruch 6, **dadurch gekennzeichnet, dass** die gewellten zweiten Abschnitte (5) zwei konvexe Seiten (13) aufweisen, die nach innen gerichtet sind, und drei konvexe Seiten (12), die nach außen gerichtet sind.

8. Wellrohr (1) gemäß einem der vorhergehenden Ansprüche, **dadurch gekennzeichnet, dass** zwischen den zweiten Abschnitten (5) und den jeweils angrenzenden Flanken (6) jeweils zweite Übergangsbereiche (8) mit einer Krümmung in Bezug auf die Längsrichtung des Wellrohres vorhanden sind.

9. Wellrohr (1) gemäß einem der vorhergehenden Ansprüche, **dadurch gekennzeichnet, dass** der Krümmungsradius ($R_1$) der zweiten Übergangsbereiche (8) größer ist als 1/8 der Differenz zwischen dem Außendurchmesser ($d_e$) des Wellrohres (1) und dem Innendurchmesser ($d_i$) des Wellrohres, insbesondere größer als 1/6 dieser Differenz.

10. Wellrohr (1) gemäß einem der vorhergehenden Ansprüche, **dadurch gekennzeichnet, dass** der Krümmungsradius ($R_1$) der zweiten Übergangsbereiche (8) etwa 1/6 der Differenz zwischen dem Außendurchmesser ($d_e$) des Wellrohres und dem Innendurchmesser ($d_i$) des Wellrohres beträgt, insbesondere etwa 1/4 dieser Differenz.

11. Wellrohr (1) gemäß einem der vorhergehenden Ansprüche, **dadurch gekennzeichnet, dass** zwischen den ersten Abschnitten (5) und den jeweils angrenzenden Flanken (6) jeweils erste Übergangsbereiche (7) mit einer Krümmung in Bezug auf die Längsrichtung des Wellrohres vorhanden sind, wobei der Krümmungsradius ($R_2$) etwa 1/2 des Krüm-

mungsradius ($R_1$) des zweiten Übergangsbereichs (8) in Bezug auf die Längsrichtung des Wellrohres beträgt.

12. Wellrohr (1) gemäß einem der vorhergehenden Ansprüche, **dadurch gekennzeichnet, dass** die Wandung der zweiten Abschnitte (5) bzw. die Wandung der Flanken (6) dicker ausgebildet ist als die Wandung des Innenrohres (2) im axialen Bereich der zweiten Abschnitte (5).

13. Wellrohr (1) gemäß einem der vorhergehenden Ansprüche, **dadurch gekennzeichnet, dass** die Wandung ($e_4$) des Wellrohres (1) im axialen Bereich der ersten Abschnitte (4) kleiner ausgebildet ist als die Summe der Wandungsdicke ($e_6$) der zweiten Abschnitte (5) und der Wandungsdicke ($e_5$) des Innenrohres (2) im axialen Bereich der zweiten Abschnitte (5), und insbesondere etwa 90 % dieser Summe beträgt.

14. Wellrohr (1) gemäß einem der vorhergehenden Ansprüche, **dadurch gekennzeichnet, dass** die axiale Breite eines Wellenberges, der aus einem zweiten Abschnitt (5) und zwei angrenzenden Flanken (6) besteht, etwa 1/10 des Außendurchmessers des Wellrohres beträgt, insbesondere zwischen 1/12 und 1/8.

15. Wellrohr (1) gemäß einem der vorhergehenden Ansprüche, **dadurch gekennzeichnet, dass** der Abstand zweier benachbarter Wellenberge, die jeweils aus einem zweiten Abschnitt (5) und zwei angrenzenden Flanken (6) bestehen, etwa das Zweifache beträgt gegenüber der Höhe des Wellenberges, insbesondere zwischen 1,5 und 2,5.

16. Wellrohr (1) gemäß einem der vorhergehenden Ansprüche, **dadurch gekennzeichnet, dass** die Flanken (6) radial nach außen dünner werden, insbesondere um mindestens 20 - 30 % in Bezug auf die Flankenwandung, die am ersten Abschnitt (4) angrenzt, bis zur Flankenwandung, die am zweiten Abschnitt (5) angrenzt.

17. Wellrohr (1) gemäß einem der vorhergehenden Ansprüche, **dadurch gekennzeichnet, dass** die Flanken (6) gegenüber einer Ebene, die senkrecht zur Achse des Wellrohres steht, um einen Winkel (W) geneigt ist.

18. Wellrohr (1) gemäß einem der vorhergehenden Ansprüche, **dadurch gekennzeichnet, dass** das Wellrohr (1) aus hochdichtem Polyethylen oder aus Polypropylen hergestellt ist.

19. Wellrohr (1) gemäß einem der vorhergehenden Ansprüche, **dadurch gekennzeichnet, dass** das Profil des Außenrohres (3) teilweise eine Parabelform, eine Kosinusform und/oder eine Exponentialform aufweiset.

20. Wellrohr (1) gemäß Anspruch 19, **dadurch gekennzeichnet, dass** zwischen den zweiten Abschnitten (5) und den jeweils angrenzenden Flanken (6) jeweils zweite Übergangsbereiche (8) mit einer Krümmung in Bezug auf die Längsrichtung des Wellrohres vorhanden sind, wobei die zweiten Abschnitte (5) alleine oder zusammen mit den jeweiligen zweiten Übergangsbereichen (8) der Form einer Parabelfunktion, Kosinusfunktion und/oder Exponentialfunktion entsprechen.

21. Wellrohr (1) gemäß Anspruch 19, **dadurch gekennzeichnet, dass** zwischen den zweiten Abschnitten (5) und den jeweils angrenzenden Flanken (6) jeweils zweite Übergangsbereiche (8) mit einer Krümmung in Bezug auf die Längsrichtung des Wellrohres vorhanden sind, wobei die zweiten Abschnitte (5) zusammen mit den jeweiligen zweiten Übergangsbereichen (8) und teilweise oder vollständig den Flanken (6) der Form einer Parabelfunktion, Kosinusfunktion und/oder Exponentialfunktion entsprechen.

22. Wellrohr (1) gemäß einem der Ansprüche 19 bis 21, **dadurch gekennzeichnet, dass** das Profil des Außenrohres (3) ein gedachtes Koordinatensystem der Parabelfunktion, Kosinusfunktion und/oder Exponentialfunktion aufweist, wobei der Ursprung des gedachten Koordinatensystems in dem Maximumspunkt (P) eines zweiten Abschnittes (5) liegt, wobei der zweite Abschnitt (5) im Maximumspunkt (P) den größten Durchmesser aufweist, und wobei die $x$-Richtung parallel zu der Längsrichtung des Wellrohres (1) und die $y$-Richtung parallel zu der Querrichtung des Wellrohres (1) verläuft.

23. Wellrohr (1) gemäß Anspruch 21 oder 22, **dadurch gekennzeichnet, dass** die Parabelfunktion der Funktion $y = -a|x^m|$ mit den Parametern $a$ und $m$ entspricht.

24. Wellrohr (1) gemäß Anspruch 23, **dadurch gekennzeichnet, dass** der Parameter $a$ einer positiven, reellen Zahl entspricht, insbesondere einer Zahl im Bereich zwischen 1 bis 50, insbesondere zwischen 2 und 20, wobei die $x$- und $y$-Werte auf einen Wert $A$ normiert sind, der dem Abstand zwischen zwei benachbarten Maximumspunkten (P) der zweiten Abschnitte (5) entspricht.

25. Wellrohr (1) gemäß Anspruch 23, **dadurch gekennzeichnet, dass** der Parameter $m$ einer positiven, ganzen Zahl größer als 1 entspricht, insbesondere einer Zahl im Bereich zwischen 2 und 10, insbesondere $m = 2$ oder $m = 3$, wobei die $x$- und $y$-Werte auf einen Wert $A$ normiert sind, der dem Abstand zwischen zwei benachbarten Maximumspunkten (P) der zweiten Abschnitte (5) entspricht.

26. Wellrohr (1) gemäß Anspruch 21 oder 22, **dadurch gekennzeichnet, dass** die Kosinusfunktion der Funktion $y = \cos(ax)^m$-1 mit den Parametern $a$ und $m$ entspricht.

27. Wellrohr (1) gemäß Anspruch 21 oder 22, **dadurch gekennzeichnet, dass** die Kosinusfunktion der Funktion $y = |\cos(ax)^m| - 1$ mit den Parametern $a$ und $m$ entspricht.

28. Wellrohr (1) gemäß einem der Ansprüche 26 oder 27, **dadurch gekennzeichnet, dass** der Parameter $a$ einer positive, reellen Zahl entspricht, insbesondere einer Zahl im Bereich zwischen 1 und 20, insbesondere zwischen 3 und 10, wobei die $x$- und $y$-Werte auf einen Wert $A$ normiert sind, der dem Abstand zwischen zwei benachbarten Maximumspunkten (P) der zweiten Abschnitte (5) entspricht.

29. Wellrohr (1) gemäß einem der einem der Ansprüche 26 oder 27, **dadurch gekennzeichnet, dass** der Parameter $m$ einer positive, reellen Zahl entspricht, insbesondere einer Zahl im Bereich zwischen 1 und 10, insbesondere $m = 1$ oder $m = 2$, wobei die $x$- und $y$-Werte auf einen Wert $A$ normiert sind, der dem Abstand zwischen zwei benachbarten Maximumspunkten (P) der zweiten Abschnitte (5) entspricht.

30. Wellrohr (1) gemäß Anspruch 21 oder 22, **dadurch gekennzeichnet, dass** die Exponentialfunktion der Funktion $y = e^{-a|xm|}$-1 entspricht mit den Parametern $a$ und $m$.

31. Wellrohr (1) gemäß Anspruch 30, **dadurch gekennzeichnet, dass** der Parameter $a$ einer positive, reellen Zahl entspricht, insbesondere einer Zahl im Bereich zwischen 1 und 100, insbesondere zwischen 10 und 50, wobei die $x$- und $y$-Werte auf einen Wert $A$ normiert sind, der dem Abstand zwischen zwei benachbarten Maximumspunkten (P) der zweiten Abschnitte (5) entspricht.

32. Wellrohr (1) gemäß Anspruch 30, **dadurch gekennzeichnet, dass** der Parameter $m$ einer positive, ganzen Zahl entspricht, insbesondere einer Zahl im Bereich zwischen 1 und 10, insbesondere $m = 2$ oder $m = 4$, wobei die $x$- und $y$-Werte auf einen Wert $A$ normiert sind, der dem Abstand zwischen zwei benachbarten Maximumspunkten (P) der zweiten Abschnitte (5) entspricht.

33. Wellrohr (1) gemäß einem der Ansprüche 20 bis 32, **dadurch gekennzeichnet, dass** zwischen den ersten Abschnitten (4) und den jeweils angrenzenden Flanken (6) jeweils erste Übergangsbereiche (7) mit einer Krümmung in Bezug auf die Längsrichtung des Wellrohres vorhanden sind, wobei die ersten Abschnitte (4) alleine oder zusammen mit den jeweils ersten Übergangsbereiche (7) der Form der entlang der Längsachse des Wellrohres (1) gespiegelten und/oder gestauchten entsprechenden Parabelfunktion, Kosinusfunktion und/oder Exponentialfunktion entsprechen.

34. Wellrohr (1) gemäß einem der Ansprüche 20 bis 32, **dadurch gekennzeichnet, dass** zwischen den ersten Abschnitten (4) und den jeweils angrenzenden Flanken (6) jeweils erste Übergangsbereiche (7) mit einer Krümmung in Bezug auf die Längsrichtung des Wellrohres vorhanden sind, wobei die ersten Abschnitte (4) zusammen mit den jeweiligen ersten Übergangsbereichen (7) und teilweise oder vollständig den Flanken (6) der Form der entlang der Längsachse des Wellrohres (1) gespiegelten und/oder gestauchten entsprechenden Parabelfunktion, Kosinusfunktion und/oder Exponentialfunktion entsprechen.

35. Wellrohr (1) gemäß einem der vorhergehenden Ansprüche, **dadurch gekennzeichnet, dass** das Profil des Außenrohres (3) zumindest teilweise in Bezug auf die Längsrichtung des Wellrohres spiralförmig bzw. schraubenförmig um das Innenrohr (2) verläuft.

**Claims**

1. A corrugated tube (1) made from thermoplastic material, which comprises an inner tube (2) and a corrugated outer tube (3) connected thereto, the profile of the outer tube having
   first sections (4) with a first average diameter,
   second sections (5) with a second average diameter which is greater than the first average diameter,
   and flanks (6) located therebetween which connect the first sections (4) to the second sections (5) which are adjacent in each case,
   the second sections (5) each having at least one curved region relative to the longitudinal direction of the corrugated tube,
   in each case second transition regions (8) with a curvature relative to the longitudinal direction of the corrugated tube being present between the second sections (5) and the flanks (6) which adjoin in each case,
   the radius of curvature $R_1$ of the second transition regions (8) being smaller than the radius of curvature $R_3$ of the second sections (5) and
   **characterised in that**
   the central point of curvature relative to the curvature of the second sections (5) in the longitudinal direction of the corrugated tube lies approximately on the wall of the inner tube (2) or in the region thereof.

2. A corrugated tube (1) according to Claim 1, **characterised in that** the second sections (5) are curved relative to the longitudinal direction of the corrugated tube such that the convex side is directed outwards.

3. A corrugated tube (1) according to Claim 1, **characterised in that** the second sections (5) are curved relative to the longitudinal direction of the corrugated tube such that the convex side is directed inwards.

4. A corrugated tube (1) according to one of the preceding claims, **characterised in that** the radius of curvature ($R_3$) relative to the curvature of the second sections (5) in the longitudinal direction of the corrugated tube is distinctly smaller than the external diameter ($d_e$) of the corrugated tube, in particular less than 1/6 of the external diameter ($d_e$) of the corrugated tube, in particular less than 1/12 of the external diameter ($d_e$) of the corrugated tube.

5. A corrugated tube (1) according to one of the preceding claims, **characterised in that** the radius of curvature ($R_3$) relative to the curvature of the second sections (5) in the longitudinal direction of the corrugated tube corresponds to approximately 1/2 of the difference between the external diameter ($d_e$) of the corrugated tube and the internal diameter ($d_i$) of the corrugated tube.

6. A corrugated tube (1) according to Claim 1 or 2, **characterised in that** the second sections (5) each have a corrugated cross-section, with at least one convex side (13) being directed inwards, and at least two convex sides (12) being directed outwards.

7. A corrugated tube (1) according to Claim 6, **characterised in that** the corrugated second sections (5) have two convex sides (13) which are directed inwards, and three convex sides (12) which are directed outwards.

8. A corrugated tube (1) according to one of the preceding claims, **characterised in that** in each case second transition regions (8) with a curvature relative to the longitudinal direction of the corrugated tube are present between the second sections (5) and the flanks (6) which adjoin in each case.

9. A corrugated tube (1) according to one of the preceding claims, **characterised in that** the radius of curvature ($R_1$) of the second transition regions (8) is greater than 1/8 of the difference between the external diameter ($d_e$) of the corrugated tube (1) and the internal diameter ($d_i$) of the corrugated tube, in particular greater than 1/6 of this difference.

10. A corrugated tube (1) according to one of the preceding claims, **characterised in that** the radius of curvature ($R_1$) of the second transition regions (8) is approximately 1/6 of the difference between the external diameter ($d_e$) of the corrugated tube and the internal diameter ($d_i$) of the corrugated tube, in particular approximately 1/4 of this difference.

11. A corrugated tube (1) according to one of the preceding claims, **characterised in that** in each case first transition regions (7) with a curvature relative to the longitudinal direction of the corrugated tube are present between the first sections (5) [sic] and the flanks (6) which adjoin in each case, the radius of curvature ($R_2$) being approximately 1/2 of the radius of curvature ($R_1$) of the second transition region (8) relative to the longitudinal direction of the corrugated tube.

12. A corrugated tube (1) according to one of the preceding claims, **characterised in that** the wall of the second sections (5) or the wall of the flanks (6) is made thicker than the wall of the inner tube (2) in the axial region of the second sections (5).

13. A corrugated tube (1) according to one of the preceding claims, **characterised in that** the wall ($e_4$) of the corrugated tube (1) in the axial region of the first sections (4) is made smaller than the total of the wall thickness ($e_6$) of the second sections (5) and of the wall thickness ($e_5$) of the inner tube (2) in the axial region of the second sections (5), and in particular is approximately 90% of this total.

14. A corrugated tube (1) according to one of the preceding claims, **characterised in that** the axial width of a wave crest, which consists of a second section (5) and two adjoining flanks (6), is approximately 1/10 of the external diameter of the corrugated tube, in particular between 1/12 and 1/8.

15. A corrugated tube (1) according to one of the preceding claims, **characterised in that** the distance between two adjacent wave crests, which each consist of a second section (5) and two adjoining flanks (6), is approximately double with respect to the height of the wave crest, in particular between 1.5 and 2.5.

16. A corrugated tube (1) according to one of the preceding claims, **characterised in that** the flanks (6) become thinner radially outwards, in particular by at least 20 - 30%, relative to the flank wall which adjoins the first section (4), up to the flank wall which adjoins the second section (5).

17. A corrugated tube (1) according to one of the preceding claims, **characterised in that** the flanks (6) is [sic] inclined by an angle (W) relative to a plane which is perpendicular to the axis of the corrugated tube.

18. A corrugated tube (1) according to one of the preceding claims, **characterised in that** the corrugated tube (1) is made of high-density polyethylene or of polypropylene.

19. A corrugated tube (1) according to one of the preceding claims, **characterised in that** the profile of the outer tube (3) has in part a parabolic form, a cosine form and/or an exponential form.

20. A corrugated tube (1) according to Claim 19, **characterised in that** in each case second transition regions (8) with a curvature relative to the longitudinal direction of the corrugated tube are present between the second sections (5) and the flanks (6) which adjoin in each case, the second sections (5) on their own or together with the respective second transition regions (8) corresponding to the form of a parabolic function, cosine function and/or exponential function.

21. A corrugated tube (1) according to Claim 19, **characterised in that** in each case second transition regions (8) with a curvature relative to the longitudinal direction of the corrugated tube are present between the second sections (5) and the flanks (6) which adjoin in each case, the second sections (5), together with the respective second transition regions (8) and in part or in full the flanks (6), corresponding to the form of a parabolic function, cosine function and/or exponential function.

22. A corrugated tube (1) according to one of Claims 19 to 21, **characterised in that** the profile of the outer tube (3) has an imaginary coordinate system of the parabolic function, cosine function and/or exponential function, the origin of the imaginary coordinate system lying in the maximum point (P) of a second section (5), the second section (5) having the greatest diameter in the maximum point (P), and the $x$ direction running parallel to the longitudinal direction of the corrugated tube (1) and the $y$ direction running parallel to the transverse direction of the corrugated tube (1).

23. A corrugated tube (1) according to Claim 21 or 22, **characterised in that** the parabolic function corresponds to the function $y = -a|x^m|$ with the parameters $a$ and $m$.

24. A corrugated tube (1) according to Claim 23, **characterised in that** the parameter $a$ corresponds to a positive, real number, in particular a number in the range between 1 to 50, in particular between 2 and 20, the $x$ and $y$ values being normalised to a value $A$ which corresponds to the distance between two adjacent maximum points (P) of the second sections (5).

25. A corrugated tube (1) according to Claim 23, **characterised in that** the parameter $m$ corresponds to a positive, whole number greater than 1, in particular a number in the range between 2 and 10, in particular $m = 2$ or $m = 3$, the $x$ and $y$ values being normalised to a value $A$ which corresponds to the distance between two adjacent maximum points (P) of the second sections (5).

26. A corrugated tube (1) according to Claim 21 or 22, **characterised in that** the cosine function corresponds to the function $y = cos(ax)^m$ -1 with the parameters $a$ and $m$.

27. A corrugated tube (1) according to Claim 21 or 22, **characterised in that** the cosine function corresponds to the function $y = |cos(ax)^m|$ -1 with the parameters $a$ and $m$.

28. A corrugated tube (1) according to one of Claims 26 or 27, **characterised in that** the parameter $a$ corresponds to a positive, real number, in particular a number in the range between 1 and 20, in particular between 3 and 10, the $x$ and $y$ values being normalised to a value $A$ which corresponds to the distance between two adjacent maximum points (P) of the second sections (5).

29. A corrugated tube (1) according to one of one of [sic] Claims 26 or 27, **characterised in that** the parameter $m$ corresponds to a positive, real number greater than 1, in particular a number in the range between 1 and 10, in particular $m = 1$ or $m = 2$, the $x$ and $y$ values being normalised to a value A which corresponds to the distance between two adjacent maximum points (P) of the second sections (5).

30. A corrugated tube (1) according to Claim 21 or 22, **characterised in that** the exponential function corresponds to the function $y = e^{-a|x^m|}$-1 with the parameters $a$ and $m$.

31. A corrugated tube (1) according to Claim 30, **characterised in that** the parameter $a$ corresponds to a positive, real number, in particular a number in the range between 1 and 100, in particular between 10 and 50, the $x$ and $y$ values being normalised to a value $A$ which corresponds to the distance between two adjacent maximum points (P) of the second sections (5).

32. A corrugated tube (1) according to Claim 30, **characterised in that** the parameter $m$ corresponds to a positive, whole number, in particular a number in the range between 1 and 10, in particular $m = 2$ or $m = 4$, the $x$ and $y$ values being normalised to a value $A$ which corresponds to the distance between two adjacent maximum points (P) of the second sections (5).

**33.** A corrugated tube (1) according to one of Claims 20 to 32, **characterised in that** in each case first transition regions (7) with a curvature relative to the longitudinal direction of the corrugated tube are present between the first sections (4) and the flanks (6) which adjoin in each case, the first sections (4) on their own or together with the respective first transition regions (7) corresponding to the form of the corresponding parabolic function, cosine function and/or exponential function which is reflected and/or compressed along the longitudinal axis of the corrugated tube (1).

**34.** A corrugated tube (1) according to one of Claims 20 to 32, **characterised in that** in each case first transition regions (7) with a curvature relative to the longitudinal direction of the corrugated tube are present between the first sections (4) and the flanks (6) which adjoin in each case, the first sections (4), together with the respective first transition regions (7) and in part or in full the flanks (6), corresponding to the form of the corresponding parabolic function, cosine function and/or exponential function which is reflected and/or compressed along the longitudinal axis of the corrugated tube (1).

**35.** A corrugated tube (1) according to one of the preceding claims, **characterised in that** the profile of the outer tube (3) at least in part relative to the longitudinal direction of the corrugated tube runs in a spiral or helix around the inner tube (2).

## Revendications

**1.** Tube ondulé (1) en plastique thermoplastique, lequel comprend un tube intérieur (2) et un tube extérieur (3) ondulé qui y est relié, le profil du tube extérieur présentant des premières portions (4) ayant un premier diamètre moyen, des secondes portions (5) ayant un second diamètre moyen qui est supérieur au premier diamètre moyen, et, entre celles-ci, des flancs (6) qui relient les premières portions (4) aux secondes portions (5) adjacentes respectives, les secondes portions (5) présentant chaque fois au moins une zone incurvée par rapport à la direction longitudinale du tube ondulé, entre les secondes portions (5) et les flancs (6) adjacents respectifs étant prévues des secondes zones de transition (8) possédant une courbure par rapport à la direction longitudinale du tube ondulé, le rayon de courbure $R_1$ des secondes zones de transition (8) étant inférieur au rayon de courbure $R_3$ des secondes portions (5), **caractérisé en ce que** le centre de courbure par rapport à la courbure des secondes portions (5) dans la direction longitudinale du tube ondulé est situé approximativement sur la paroi du tube intérieur (2) ou au voisinage de celle-ci.

**2.** Tube ondulé (1) selon la revendication 1, **caractérisé en ce que** les secondes portions (5) sont incurvées par rapport à la direction longitudinale du tube ondulé, de façon que le côté convexe soit dirigé vers l'extérieur.

**3.** Tube ondulé (1) selon la revendication 1, **caractérisé en ce que** les secondes portions (5) sont incurvées par rapport à la direction longitudinale du tube ondulé, de façon que le côté convexe soit dirigé vers l'intérieur.

**4.** Tube ondulé (1) selon une des revendications précédentes, **caractérisé en ce que** le rayon de courbure ($R_3$) par rapport à la courbure des secondes portions (5) dans la direction longitudinale du tube ondulé est nettement inférieur au diamètre extérieur ($d_e$) du tube ondulé, en particulier inférieur à 1/6 du diamètre extérieur ($d_e$) du tube ondulé, en particulier inférieur à 1/12 du diamètre extérieur ($d_e$) du tube ondulé.

**5.** Tube ondulé (1) selon une des revendications précédentes, **caractérisé en ce que** le rayon de courbure ($R_3$) par rapport à la courbure des secondes portions (5) dans la direction longitudinale du tube ondulé correspond approximativement à 1/2 de la différence entre le diamètre extérieur ($d_e$) du tube ondulé et le diamètre intérieur ($d_i$) du tube ondulé.

**6.** Tube ondulé (1) selon la revendication 1 ou 2, **caractérisé en ce que** les secondes portions (5) présentent chacune une section transversale ondulée, au moins un côté convexe (13) étant dirigé vers l'intérieur et au moins deux côtés convexes (12) étant dirigés vers l'extérieur.

**7.** Tube ondulé (1) selon la revendication 6, **caractérisé en ce que** les secondes portions ondulées (5) présentent deux côtés convexes (13) qui sont dirigés vers l'intérieur et trois côtés convexes (12) qui sont dirigés vers l'extérieur.

**8.** Tube ondulé (1) selon une des revendications précédentes, **caractérisé en ce que** des secondes zones de transition (8) ayant une courbure par rapport à la direction longitudinale du tube ondulé sont prévues entre les secondes portions (5) et les flancs (6) adjacents respectifs.

**9.** Tube ondulé (1) selon une des revendications précédentes, **caractérisé en ce que** le rayon de courbure ($R_1$) des secondes zones de transition (8) est supérieur à 1/8 de la différence entre le diamètre extérieur ($d_e$) du tube ondulé (1) et le diamètre intérieur ($d_i$) du tube ondulé, en particulier est supérieur à 1/6 de cette différence.

10. Tube ondulé (1) selon une des revendications précédentes, **caractérisé en ce que** le rayon de courbure ($R_1$) des secondes zones de transition (8) est approximativement égal à 1/6 de la différence entre le diamètre extérieur ($d_e$) du tube ondulé et le diamètre intérieur ($d_i$) du tube ondulé, en particulier est approximativement égal à 1/4 de cette différence.

11. Tube ondulé (1) selon une des revendications précédentes, **caractérisé en ce que** des premières zones de transition (7) ayant une courbure par rapport à la direction longitudinale du tube ondulé sont prévues entre les premières portions (5) et les flancs (6) adjacents respectifs, le rayon de courbure ($R_2$) étant approximativement égal à 1/2 du rayon de courbure ($R_1$) de la seconde zone de transition (8) par rapport à la direction longitudinale du tube ondulé.

12. Tube ondulé (1) selon une des revendications précédentes, **caractérisé en ce que** la paroi des secondes portions (5) ou la paroi des flancs (6) est conçue plus épaisse que la paroi du tube intérieur (2) dans la région axiale des secondes portions (5).

13. Tube ondulé (1) selon une des revendications précédentes, **caractérisé en ce que** la paroi ($e_4$) du tube ondulé (1) dans la région axiale des premières portions (4) est conçue plus petite que la somme de l'épaisseur de paroi ($e_6$) des secondes portions (5) et de l'épaisseur de paroi ($e_5$) du tube intérieur (2) dans la région axiale des secondes portions (5), et en particulier approximativement égale à 90 % de cette somme.

14. Tube ondulé (1) selon une des revendications précédentes, **caractérisé en ce que** la largeur axiale d'une crête d'onde, qui se compose d'une seconde portion (5) et de deux flancs (6) adjacents, est approximativement égale à 1/10 du diamètre extérieur du tube ondulé, en particulier comprise entre 1/12 et 1/8.

15. Tube ondulé (1) selon une des revendications précédentes, **caractérisé en ce que** la distance de deux crêtes d'onde adjacentes, qui se composent chacune d'une seconde portion (5) et de deux flancs (6) adjacents, est approximativement égale au double de la hauteur de la crête d'onde, en particulier est comprise entre 1,5 et 2,5.

16. Tube ondulé (1) selon une des revendications précédentes, **caractérisé en ce que** les flancs (6) deviennent plus minces radialement vers l'extérieur, en particulier d'au moins 20-30 % % par rapport à la paroi de flanc qui est adjacente à la première portion (4), jusqu'à la paroi de flanc qui est adjacente à la seconde portion (5).

17. Tube ondulé (1) selon une des revendications précédentes, **caractérisé en ce que** les flancs (6) sont inclinés d'un angle (W) par rapport à un plan qui est perpendiculaire à l'axe du tube ondulé.

18. Tube ondulé (1) selon une des revendications précédentes, **caractérisé en ce que** le tube ondulé (1) est réalisé en polyéthylène haute densité ou en polypropylène.

19. Tube ondulé (1) selon une des revendications précédentes, **caractérisé en ce que** le profil du tube extérieur (3) présente en partie une forme parabolique, une forme cosinusoïdale et/ou une forme exponentielle.

20. Tube ondulé (1) selon la revendication 19, **caractérisé en ce que** des secondes zones de transition (8) ayant une courbure par rapport à la direction longitudinale du tube ondulé sont prévues entre les secondes portions (5) et les flancs (6) adjacents respectifs, les secondes portions (5) correspondant, seules ou avec les secondes zones de transition (8) respectives, à la forme d'une fonction parabolique, d'une fonction cosinusoïdale et/ou d'une fonction exponentielle.

21. Tube ondulé (1) selon la revendication 19, **caractérisé en ce que** des secondes zones de transition (8) ayant une courbure par rapport à la direction longitudinale du tube ondulé sont prévues entre les secondes portions (5) et les flancs (6) adjacents respectifs, les secondes portions (5) correspondant, avec les secondes zones de transition (8) respectives et en partie ou en totalité les flancs (6), à la forme d'une fonction parabolique, d'une fonction cosinusoïdale et/ou d'une fonction exponentielle.

22. Tube ondulé (1) selon une des revendications 19 à 21, **caractérisé en ce que** le profil du tube extérieur (3) présente un système de coordonnées imaginaire de la fonction parabolique, de la fonction cosinusoïdale et/ou de la fonction exponentielle, l'origine du système de coordonnées imaginaire se trouvant au point maximum (P) d'une seconde portion (5), la seconde portion (5) présentant son plus grand diamètre au point maximum (P), et la direction *x* s'étendant parallèlement à la direction longitudinale du tube ondulé (1) et la direction *y* s'étendant parallèlement à la direction transversale du tube ondulé (1).

**23.** Tube ondulé (1) selon la revendication 21 ou 22, **caractérisé en ce que** la fonction parabolique correspond à la fonction $y = -a|x^m|$ ayant pour paramètres $a$ et $m$.

**24.** Tube ondulé (1) selon la revendication 23, **caractérisé en ce que** le paramètre $a$ correspond à un nombre réel positif, en particulier un nombre compris entre 1 et 50, en particulier entre 2 et 20, les valeurs $x$ et $y$ étant normalisées à une valeur $A$ qui correspond à la distance entre deux points maximums (P) adjacents des secondes portions (5).

**25.** Tube ondulé (1) selon la revendication 23, **caractérisé en ce que** le paramètre $m$ correspond à un nombre entier positif supérieur à 1, en particulier à un nombre compris entre 2 et 10, en particulier $m = 2$ ou $m = 3$, les valeurs $x$ et $y$ étant normalisées à une valeur $A$ qui correspond à la distance entre deux points maximums (P) adjacents des secondes portions (5).

**26.** Tube ondulé (1) selon la revendication 21 ou 22, **caractérisé en ce que** la fonction cosinusoïdale correspond à la fonction $y = cos\,(ax)^m - 1$ ayant pour paramètres $a$ et $m$.

**27.** Tube ondulé (1) selon la revendication 21 ou 22, **caractérisé en ce que** la fonction cosinusoïdale correspond à la fonction $y = |cos(ax)^m| - 1$ ayant pour paramètres $a$ et $m$.

**28.** Tube ondulé (1) selon une des revendications 26 ou 27, **caractérisé en ce que** le paramètre $a$ correspond à un nombre réel positif, en particulier à un nombre compris entre 1 et 20, en particulier entre 3 et 10, les valeurs $x$ et $y$ étant normalisées à une valeur $A$ qui correspond à la distance entre deux points maximums (P) adjacents des secondes portions (5).

**29.** Tube ondulé (1) selon une des revendication 26 ou 27, **caractérisé en ce que** le paramètre $m$ correspond à un nombre réel positif, en particulier à un nombre compris entre 1 et 10, en particulier $m = 1$ ou $m = 2$, les valeurs $x$ et $y$ étant normalisées à une valeur $A$ qui correspond à la distance entre deux points maximums (P) adjacents des secondes portions (5).

**30.** Tube ondulé (1) selon la revendication 21 ou 22, **caractérisé en ce que** la fonction exponentielle correspond à la fonction $y = |cos(ax)^m| -1$ ayant pour paramètres $a$ et m.

**31.** Tube ondulé (1) selon la revendication 30, **caractérisé en ce que** le paramètre $a$ correspond à un nombre réel positif, en particulier un nombre compris entre 1 et 100, en particulier entre 10 et 50, les valeurs $x$ et $y$ étant normalisées à une valeur $A$ qui correspond à la distance entre deux points maximums (P) adjacents des secondes portions (5).

**32.** Tube ondulé (1) selon la revendication 30, **caractérisé en ce que** le paramètre $m$ correspond à un nombre entier positif, en particulier à un nombre compris entre 1 et 10, en particulier $m = 2$ ou $m = 4$, les valeurs $x$ et $y$ étant normalisées à une valeur $A$ qui correspond à la distance entre deux points maximums (P) adjacents des secondes portions (5).

**33.** Tube ondulé (1) selon une des revendications 20 à 32, **caractérisé en ce que** des premières zones de transition (7) ayant une courbure par rapport à la direction longitudinale du tube ondulé sont prévues entre les premières portions (4) et les flancs (6) adjacents respectifs, les premières portions (4) correspondant, seules ou avec les premières zones de transition (7) respectives, à la forme de la fonction parabolique, de la fonction cosinusoïdale et/ou de la fonction exponentielle correspondante réfléchie et/ou comprimée suivant l'axe longitudinal du tube ondulé (1).

**34.** Tube ondulé (1) selon une des revendications 20 à 32, **caractérisé en ce que** des premières zones de transition (7) ayant une courbure par rapport à la direction longitudinale du tube ondulé sont prévues entre les premières portions (4) et les flancs (6) adjacents respectifs, les premières portions (4) correspondant, avec les premières zones de transition (7) respectives et en partie ou en totalité avec les flancs (6), à la forme de la fonction parabolique, de la fonction cosinusoïdale et/ou de la fonction exponentielle correspondante réfléchie et/ou comprimée suivant l'axe longitudinal du tube ondulé (1).

**35.** Tube ondulé (1) selon une des revendications précédentes, **caractérisé en ce que** le profil du tube extérieur (3) s'étend, par rapport à la direction longitudinale du tube ondulé, au moins en partie en forme de spirale ou d'hélice autour du tube intérieur (2).

EP 1 847 752 B1

Fig. 1

14

EP 1 847 752 B1

Fig. 2

15

Fig. 3

Fig. 4

Fig. 5

$y = \cos(4x)^{1} - 1$

$y = \left|\cos(8x)^{2}\right| - 1$

Fig. 6

$-\bullet - y = e^{-10|x^2|} - 1$

$-\blacksquare - y = e^{-50|x^4|} - 1$

Fig. 7

Fig. 8

Fig. 9

EP 1 847 752 B1

Fig. 10

23

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0385465 B2
- EP 0820566 B1